# EUROPEAN PATENT APPLICATION

(11) **EP 3 705 265 A1**
(43) Date of publication of application: **09.09.2020**
(21) Application number: 19193890.1
(22) Date of filing: 27.08.2019
(51) Int. Cl.: B29C 64/118, B29C 64/321, B29C 64/393, B33Y 10/00, B33Y 30/00, B33Y 40/00, B33Y 50/02, B65H 51/10, B65H 51/30, B65H 51/32

(54) **FEEDING CONTROL SYSTEM OF 3D PRINTER AND FEEDING CONTROL METHOD THEREOF**

(30) Priority: 08.03.2019 CN 201910175648
(71) Applicant: XYZprinting, Inc., New Taipei City 22201 (TW); Kinpo Electronics, Inc., New Taipei City 22201 (TW)
(72) Inventor: CHU, Ting-Chun, 22201 New Taipei City (TW); HSIEH, Yi-Chu, 22201 New Taipei City (TW); LEE, Yang-Teh, 22201 New Taipei City (TW)
(74) Representative: 2K Patentanwälte Blasberg Kewitz & Reichel

(57) **Abstract**

The present disclosure relates to a feeding control system of a 3D printer and a feeding control method thereof. The feeding control system (10), used with a filament (200), comprises a first feeding apparatus (1), a second feeding apparatus (2), and a feeding sensor (4). The first feeding apparatus (1) comprises an outlet (12), a fixed wheel set (13), a movable wheel set (14), and a controller (15). The fixed wheel set (13) and the movable wheel set (14) hold and deliver the filament (200) to the outlet (12). The controller (15) is disposed corresponding to the movable wheel set (14). The second feeding apparatus (2) is installed in the 3D printer (100). The feeding sensor (4) is disposed corresponding to the second feeding apparatus (2) and used to sense entrance of the filament (200) to generate a release signal. After receiving the release signal, the controller (15) drives the movable wheel set (14) to move away from the fixed wheel set (13) to release the filament (200).

## Description

### BACKGROUND OF THE INVENTION

### Field of the Invention

The present invention relates to a peripheral apparatus of a 3D (3-dimensional) printer, and in particular, to a feeding control system of a 3D printer and a feeding control method thereof.

### Description of Related Art

FDM (Fused Deposition Modeling) is one of the object-forming principles of the 3D printer. The main process of FDM is as follows. The material is heated to an elevated temperature in a semi-molten state, then extruded on a platform and reverts to a solid state quickly. In this way, the stacking process is repeated to form a 3D object.

To increase the feeding speed of the above-mentioned material, a rear feeding motor and a front feeding motor are currently used to convey the filament sequentially to the front feeding nozzle, which can save the time of delivering the filament to the nozzle by the user and thus improves use convenience in which when the filament is carried to the front feeding motor, the front feeding motor synchronizes with the rear feeding motor to deliver the filament.

However, when the front feeding motor starts to pull the filament, the rear feeding motor will start synchronously to push the filament. During the fast printing process or the pull-back process, the issue that the speed of the front feeding motor does not synchronize with that of the rear feeding motor is particularly prone to occur. As a result, the filament is worn, squeezed, blocked, or broken, which causes poor printing quality.

In view of foregoing, the inventor pays special attention to research with the application of related theory to propose the cooling fan of the present invention, a reasonable design, to overcome the above disadvantages regarding the above related art.

### SUMMARY OF THE INVENTION

The present invention provides a feeding control system of a 3D printer and a feeding control method thereof, which uses the mechanism when the second feeding apparatus holds the filament, the first feeding apparatus releases the filament immediately and stops pulling the filament to solve the problem of different feeding speeds and enhance the printing quality of the 3D printer.

In an embodiment, the present invention provides a feeding control system of a 3D printer, used with a filament. The feeding control system comprises a first feeding apparatus, a second feeding apparatus, and a feeding sensor. The first feeding apparatus comprises an outlet, a fixed wheel set, a movable wheel set, and a controller. The fixed wheel set and the movable wheel set hold and deliver the filament to the outlet; the controller is disposed corresponding to the movable wheel set. The second feeding apparatus is installed in the interior of the 3D printer. The feeding sensor is disposed corresponding to the second feeding apparatus and used to sense entrance of the filament and is held by the second feeding apparatus to generate a release signal in which after receiving the release signal, the controller drives the movable wheel set to move away from the fixed wheel set to release the filament.

In an embodiment, the present invention provides a feeding control method of a 3D printer, which comprises the steps of (a) providing a first feeding apparatus comprising an outlet and a driving wheel which drives and delivers a filament, (b) providing a second feeding apparatus installed in the interior of the 3D printer in which when the filament enters the 3D printer, the second feeding apparatus drives and delivers the filament, (c) causing the first feeding apparatus to drive and deliver the filament to the 3D printer through the outlet, and (d) controlling the second feeding apparatus to drive and deliver the filament and causing the first feeding apparatus to stop delivering the filament when the filament enters the 3D printer.

According to the above-mentioned description, when the second feeding apparatus holds the filament, the first feeding apparatus releases the filament immediately and stops pushing the filament. At this moment, only the second feeding apparatus pulls the filament which can solve the problem of different feeding speeds and prevent the filament from being worn, squeezed, blocked, and broken to improve the printing quality of the 3D printer.

### BRIEF DESCRIPTION OF DRAWING

FIG. 1 is a perspective view of the feeding control system of the present invention;
FIG. 2 is a perspective view of the first feeding apparatus of the present invention;
FIG. 3 is a cross-sectional view of the first feeding apparatus of the present invention;
FIG. 4 is a perspective view of the first feeding apparatus of the present invention in an operational state;
FIG. 5 is a cross-sectional view of the first feeding apparatus of the present invention in an operational state;
FIG. 6 is a perspective view of the first feeding apparatus of the present invention in another operational state;
FIG. 7 is a cross-sectional view of the first feeding apparatus of the present invention in another operational state;
FIG. 8 is the flow chart of the feeding control method of a 3D printer of the present invention;
FIG. 9 is a perspective view of the first feeding apparatus according to another embodiment of the present invention in an operational state;
FIG. 10 is a cross-sectional view of the first feeding apparatus according to another embodiment of the present invention in an operational state; and
FIG. 11 is a perspective view of the feeding control system according to another embodiment of the present invention.

### DETAILED DESCRIPTION OF THE INVENTION

The detailed description and technical details of the present invention will be explained below with reference to accompanying figures. However, the accompanying figures are only for reference and explanation, but not to limit the scope of the present invention.

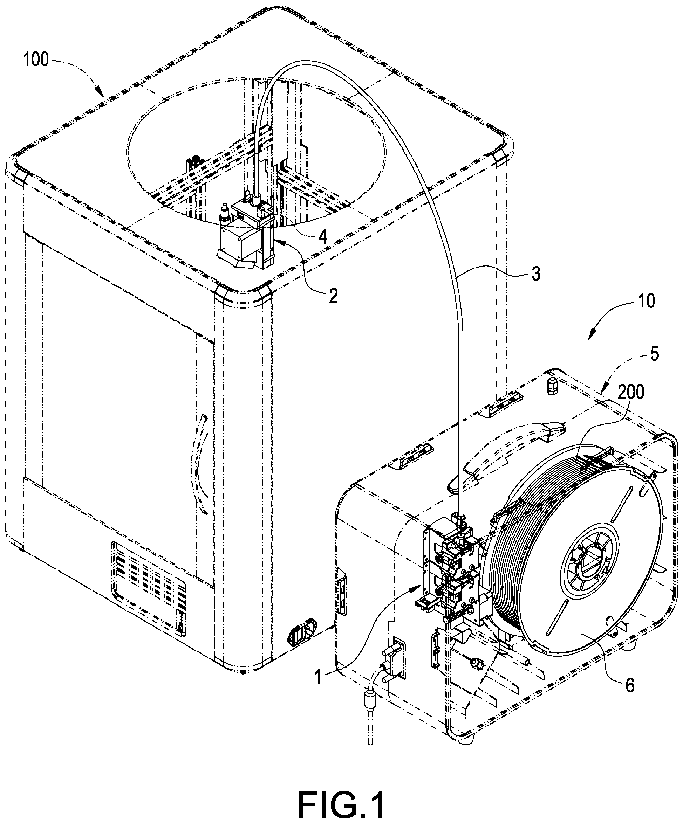

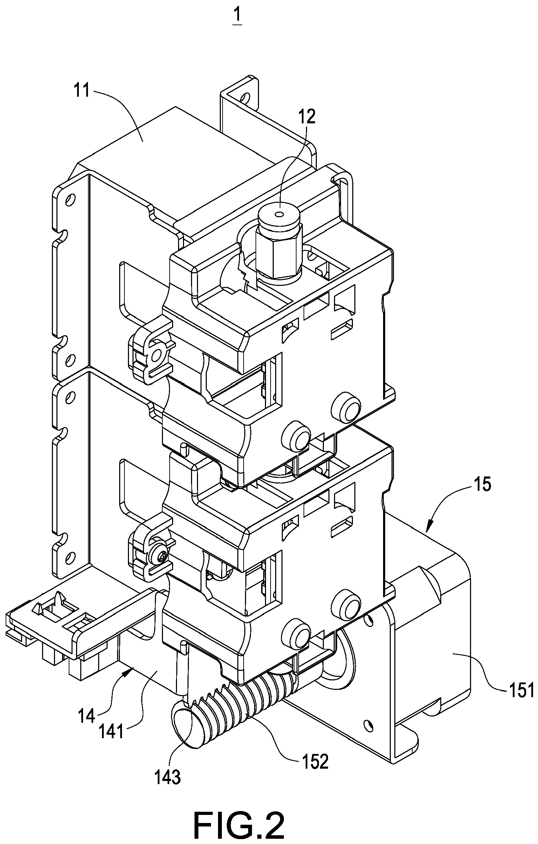

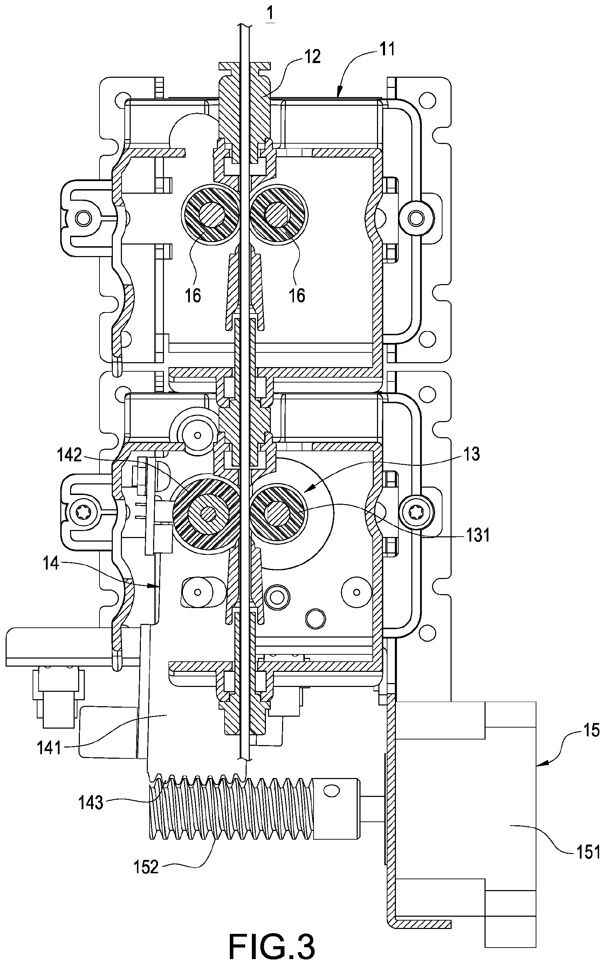

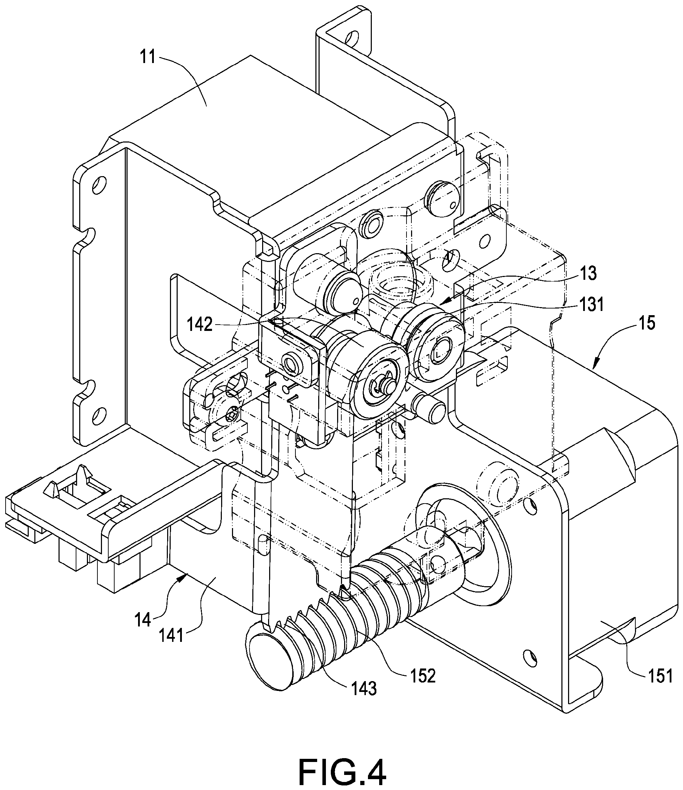

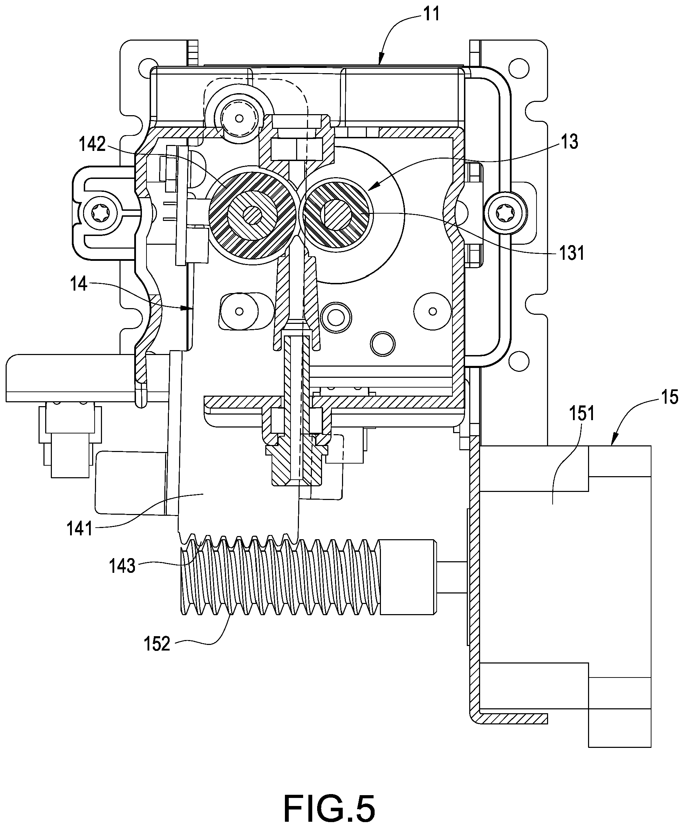

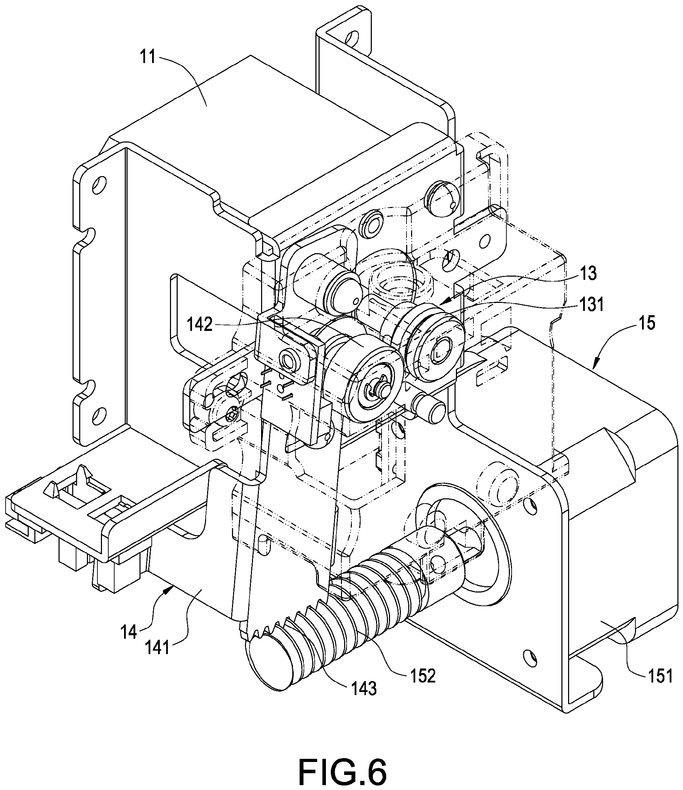

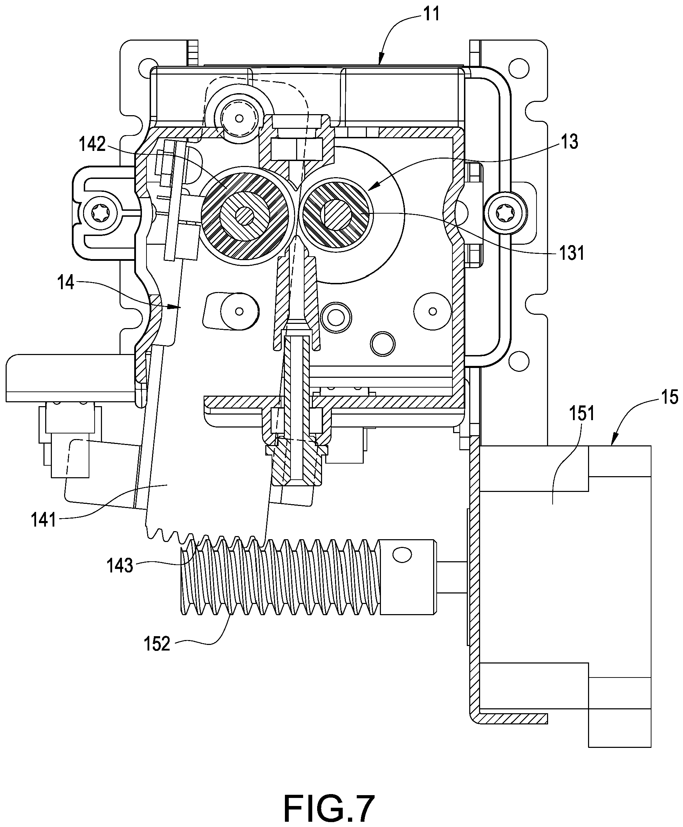

Please refer to FIGS. 1-7. The present invention provides a feeding control system of a 3D printer and a feeding control method thereof, used with a filament 200. The feeding control system 10 mainly comprises a first feeding apparatus 1, a second feeding apparatus 2, a feeding tube 3, and a feeding sensor 4.

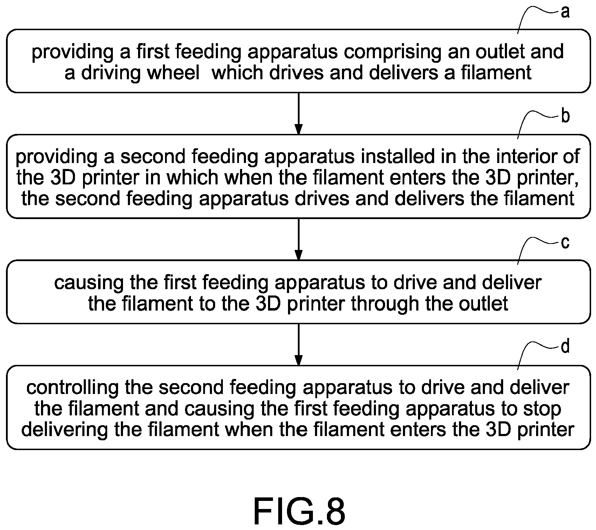

FIG. 8 shows the steps of the feeding control method of a 3D printer of the present invention. As shown in step a and FIGS. 1-7, the first feeding apparatus 1 is provided and comprises a main frame 11, an outlet 12, a fixed wheel set 13, a movable wheel set 14, and a controller 15. The fixed wheel set 13 and the movable wheel set 14 hold and deliver the filament 200 together to the outlet 12; the controller 15 is disposed corresponding to the movable wheel set 14.

The detailed description is given below. The fixed wheel set 13 has a driving wheel 131 installed on the main frame 11; the driving wheel 131 drives and delivers the filament 200. The outlet 12 is formed on the main frame 11 and disposed corresponding to the rotating direction of the driving wheel 131. The movable wheel set 14 comprises a movable bracket 141 hinged to main frame 11 and a driven wheel 142 installed on the movable bracket 141 and disposed corresponding to the driving wheel 131. The bottom of the movable bracket 141 is provided with a gear tooth 143.

Moreover, the controller 15 comprises a motor 151 and a worm 152 rotating with the motor 151. The movable bracket 141 drives the driven wheel 142, by means of the screw linkage between the gear tooth 143 and the worm 152, to approach the driving wheel 131 to hold and deliver the filament 200 or to move away from the driving wheel 131 to release the filament 200.

In addition, the first feeding apparatus 1 further comprises two auxiliary wheels 16 installed on the main frame 11. The two auxiliary wheels 16 are disposed between the outlet 12 and the driving wheel 131 to hold and delver the filament 200. The two auxiliary wheels 16 are used to direct the filament 200 to be delivered from the driving wheel 131 to the outlet 12. Therefore, the number of the auxiliary wheels 16 can be adjusted or the auxiliary wheels 16 can be omitted depending on the distance from the driving wheel 131 to the outlet 12.

As shown in step b and FIG. 1, the second feeding apparatus 2 is installed in the interior of the 3D printer 100 and is used to deliver the filament 200 to the feeding nozzle (not shown) so that the second feeding apparatus 2 drives to deliver the filament 200 when the filament 200 enters the 3D printer 100.

As shown in step c and FIGS. 1-5, the first feeding apparatus 1 drives and delivers the filament 200 to the 3D printer 100 through the outlet 12. The description is detailed below. The feeding tube 3 is connected between the outlet 12 and the second feeding apparatus 2; the feeding tube 3 is used to direct the filament 200 to be delivered from the outlet 12 to the second feeding apparatus 2.

Besides, in an embodiment, the feeding tube 3 can be optionally omitted and instead the user places the filament 200 manually to the second feeding apparatus 2 (or the interior of the 3D printer 100) after the first feeding apparatus 1 delivers the filament 200 to the outlet 12. The second feeding apparatus 2 which has at least one driving wheel to pull the filament 200 can be a mechanism design with which a person having general knowledge and ordinary skills in the art is familiar or an identical or similar design to the above-mentioned first feeding apparatus 1.

As shown in step d and FIGS. 1-7, when the filament 200 enters the 3D printer 100, the second feeding apparatus 2 is controlled to drive and deliver the filament 200 and the first feeding apparatus 1 stops delivering the filament 200.

The further explanation is given below. A feeding sensor 4 is provided and disposed corresponding to the second feeding apparatus 2 to sense entrance of the filament 200 driven and delivered by the second feeding apparatus 2 to generate a release signal. That is, the feeding sensor 4 is used to sense the second feeding apparatus 2 holds the filament 200 to generate a release signal.

A controller 15 is provided and disposed corresponding to the first feeding apparatus 1 such that the delivery of the filament 200 by the first feeding apparatus 1 is stopped after the controller 15 receives the release signal.

The detailed description is as follows. A fixed wheel set 13 and a movable wheel set 14 are provided. The driving wheel 131 is disposed at the fixed wheel set 13. The movable wheel set 14 and the fixed wheel set 13 are controlled apart from each other to release the filament 200 and the driving wheel 131 is caused to stop the delivery of the filament 200 by the first feeding apparatus 1. That is, after receiving the release signal, the motor 151 rotates the worm 152 to drive the movable bracket 141 to move away from the driving wheel 131 to release the filament 200; the driving wheel 131 stops rotating after receiving the release signal.

As shown in FIG. 1, the feeding control system 10 of the present invention further comprises a material bin 5 and a spool 6. The material bin 5 is disposed at one side of the 3D printer 100; the first feeding apparatus 1 and the spool 6 are both disposed in the material bin 5. The spool 6 is disposed at one side of the first feeding apparatus 1 and used to wind the filament 200 such that the filament 200 can be wound into a roll through the spool 6 for easy replacement.

The operational states of the feeding control system 10 of the present invention are explained as follows. First, as shown in FIGS. 1-3, the filament 200 wound around the spool 6 is placed in the material bin 5. Then, the filament 200 is penetrated into the first feeding apparatus 1 such that the filament 200 is clamped between the driven wheel 142 and driving wheel 131 and passed through the outlet 12. At this moment, the preparations for the automatic feeding are completed.

Also, as shown in FIGS. 1-5, after the driving wheel 131 rotates, the driving wheel 131 and the driven wheel 142 hold and deliver the filament 200 together to the outlet 12. Next, the feeding tube 3 directs the filament 200 to be delivered from the outlet 12 to the second feeding apparatus 2.

Furthermore, as shown in FIGS. 1, 6, and 7, the feeding sensor 4 senses that the second feeding apparatus 2 holds the filament 200 and generates the release signal. After receiving the release signal, the motor 151 rotates the worm 152 to drive the movable bracket 141 to move away from the driving wheel 131 such that the driven wheel 142 moves away from the driving wheel 131 to release the filament 200 in order that after receiving the release signal, the controller 15 drives the movable wheel set 14 to move away from the fixed wheel set 13 to release the filament 200; simultaneously, after receiving the release signal, the driving wheel 131 stops operating and only the second feeding apparatus 2 pulls the filament 200. At this moment, the automatic feeding is completed.

In the prior art, when the front feeding motor starts to pull the filament, the rear feeding motors synchronizes to start pushing the filament, which easily results in asynchronous speeds of the front feeding motor and the rear feeding motor. Compared with the prior art, when the second feeding apparatus 2 of the present invention holds the filament 200, the first feeding apparatus 1 releases the filament 200 immediately to stop pushing the filament 200 and only the second feeding apparatus 2 pulls the filament 200. Consequently, the problem of different feeding speeds is overcome and the filament is prevented from being worn, squeezed, blocked, or broken to improve the printing quality of the 3D printer 100.

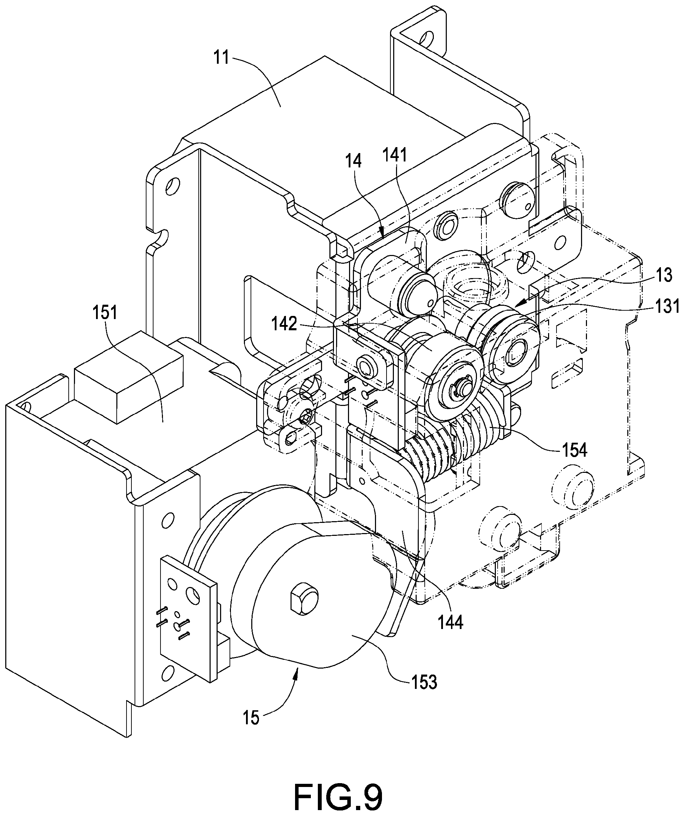

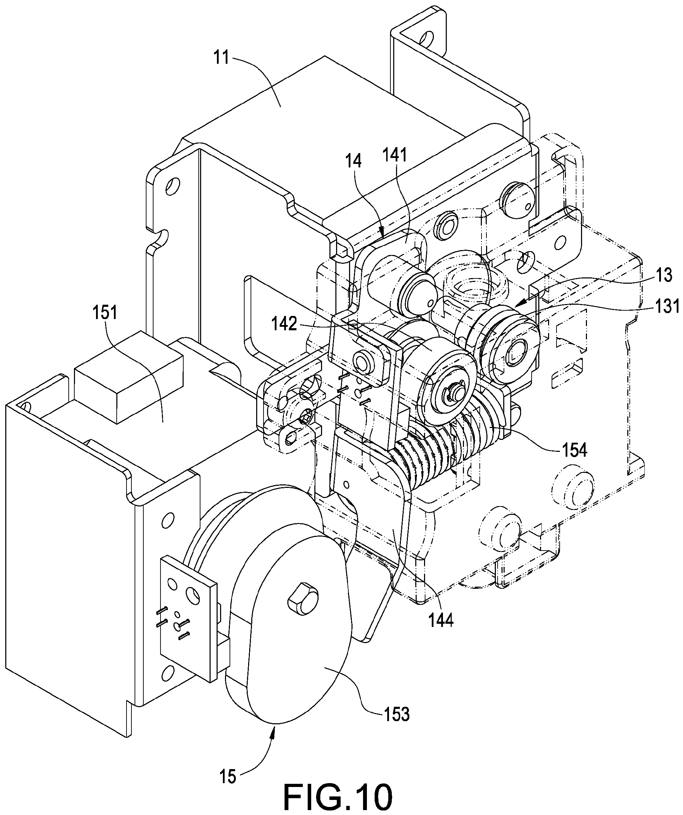

Please refer to FIGS. 9 and 10, which refer to the first feeding apparatus 1 according to another embodiment of the present invention. The embodiment shown in FIGS. 9 and 10 is roughly similar to that shown in FIGS. 1-7. The major difference between the above two embodiments is the structure of the controller 15.

The further explanation is as follows. A projecting plate 144 protrudes from the movable bracket 141. The controller 15 comprises a motor 151, a cam 153, and a return spring 154; the cam 153 rotates with the motor 151 and is disposed corresponding to one side of the projecting plate 144; the return spring 154 is clamped between the main frame 11 and the other side of the projecting plate 144. When the motor 151 drives the cam 153 to press against the projecting plate 144, the recovering spring force of the return spring 154 can be resisted such that the driven wheel 142 is driven to approach the driving wheel 131 to hold and deliver the filament 200. When the motor 151 drives the cam 153 to release the projecting plate 144, the recovering spring force of the return spring 154 immediately presses against the projecting plate 144 to drive the driven wheel 142 to move away from the driving wheel 131 to release the filament 200. The person having general knowledge and ordinary skills in the art should realize the above control mechanism can be adjusted to become a reverse design. That is, when the motor 151 drives the cam 153 to press against the projecting plate 144, the driven wheel 142 is caused to move away from the driving wheel 131; when the motor 151 drives the cam 153 to release the projecting plate 144, the driven wheel 142 is caused to approach the driving wheel 131.

After receiving the release signal, the motor 151 drives the cam 153 to release the projecting plate 144 such that the return spring 154 pushes the movable bracket 141 to move away from the driving wheel 131. In this way, the current embodiment can achieve the same function and effect as the embodiment in FIGS. 1-7.

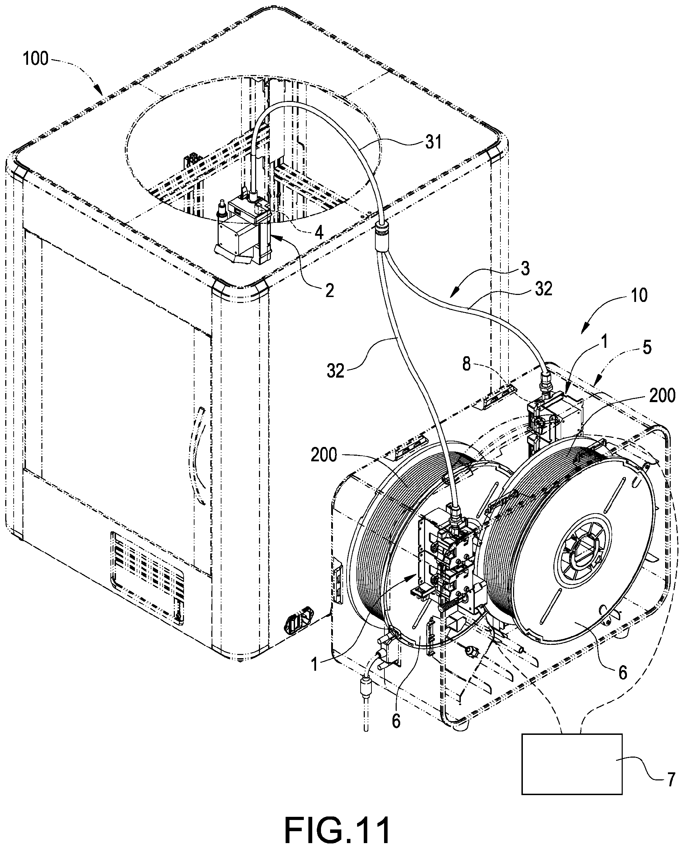

Please refer to FIG. 11, which is a perspective view of the feeding control system 10 according to another embodiment of the present invention. The embodiment shown in FIG. 11 is roughly similar to that shown in FIGS. 1-7. The difference between the above two embodiments in FIG. 11 and in FIGS. 1-7 is that the first feeding apparatus 1 in FIG. 11 is plural in number.

The details are given below. The filament 200 and the first feeding apparatus 1 are both plural in number. The filaments 200 are disposed corresponding to the respective first feeding apparatuses 1. The feeding tube 3 has a main tube 31 disposed at one end thereof and a plurality of split tubes 32 which extend from the other end thereof and communicate with the main tube 31. The main tube 31 is connected to the second feeding apparatus 2 and the split tubes 32 are connected to the respective outlets 12.

Furthermore, the feeding control system 10 of the present invention further comprises a calculator 7 and a plurality of reloading sensors 8. The calculator 7 is electrically connected to each of the first feeding apparatuses 1 and the reloading sensors 8 are disposed corresponding to the respective first feeding apparatuses 1. Each of the reloading sensors 8 is used to detect the separation due to shortage of the filament 200 from the outlet 12 to generate a reloading signal. That is, the filament 200 in the first feeding apparatus 1 runs out, the reloading sensor 8 will send a reloading signal.

When the calculator 7 receives the reloading signal sent from one of the first feeding apparatuses 1, another first feeding apparatus 1 will deliver the filament 200 to the main tube 31 through the corresponding split tube 32. That is, the fixed wheel set 13 and the movable wheel set 14 of another first feeding apparatus 1 are driven to hold and deliver the filament 200 to the split tube 32 (or the filament 200 has been delivered to the corresponding split tube 32 when installed in advance) such that the main tube 31 has sufficient filament 200 to be delivered to the second feeding apparatus 2 at any time, which can prevent the 3D printer 100 from stopping by lack of filament 200 to make the feeding control system 10 have the feature of automatic feeding.

## Claims

1. A feeding control system (10) of a 3D printer (100), used with a filament (200), the feeding control system (10) comprising:
a first feeding apparatus (1) comprising an outlet (12), a fixed wheel set (13), a movable wheel set (14), and a controller (15), wherein the fixed wheel set (13) and the movable wheel set (14) hold and deliver the filament (200) to the outlet (12), wherein the controller (15) is disposed corresponding to the movable wheel set (14);
a second feeding apparatus (2) installed in the interior of the 3D printer (100); and
a feeding sensor (4) disposed corresponding to the second feeding apparatus (2) and used to sense entrance of the filament (200) and being held by the second feeding apparatus (2) to generate a release signal,
wherein after receiving the release signal, the controller (15) drives the movable wheel set (14) to move away from the fixed wheel set (13) to release the filament (200).

2. The feeding control system (10) of a 3D printer (100) according to claim 1, wherein the first feeding apparatus (1) further comprises a main frame (11), wherein the fixed wheel set (13) has a driving wheel (131) installed on the main frame (11), wherein the movable wheel set (14) comprises a movable bracket (141) hinged to main frame (11) and a driven wheel (142) installed on the movable bracket (141) and disposed corresponding to the driving wheel (131).

3. The feeding control system (10) of a 3D printer (100) according to claim 2, wherein a bottom of the movable bracket (141) is provided with a gear tooth (143), wherein the controller (15) comprises a motor (151) and a worm (152) rotating with the motor (151), wherein the movable bracket (141) drives the driven wheel (142), by means of the screw linkage between the gear tooth (143) and the worm (152), to approach the driving wheel (131) to hold and deliver the filament (200) or to move away from the driving wheel (131) to release the filament (200).

4. The feeding control system (10) of a 3D printer (100) according to claim 3, wherein after receiving the release signal, the motor (151) rotates the worm (152) to drive the movable bracket (141) to move away from the driving wheel (131) and the driving wheel (131) stops rotating after receiving the release signal.

5. The feeding control system (10) of a 3D printer (100) according to claim 2, wherein a projecting plate (144) protrudes from the movable bracket (141), wherein the controller (15) comprises a motor (151), a cam (153), and a return spring (154), wherein the cam (153) rotates with the motor (151) and is disposed corresponding to one side of the projecting plate (144), wherein the return spring (154) is clamped between the main frame (11) and the other side of the projecting plate (144), wherein the motor (151) drives the cam (153) to press against or release the projecting plate (144) to drive the driven wheel (142) to approach the driving wheel (131) to hold and deliver the filament (200) or to move away from the driving wheel (131) to release the filament (200).

6. The feeding control system (10) of a 3D printer (100) according to claim 3 or claim 4, wherein the outlet (12) is formed on the main frame (11) and disposed corresponding to the rotating direction of the driving wheel (131).

7. The feeding control system (10) of a 3D printer (100) according to claim 1, further comprising a feeding tube (3) which is connected between the outlet (12) and the second feeding apparatus (2), wherein the feeding tube (3) is used to direct the filament (200) to be delivered from the outlet (12) to the second feeding apparatus (2).

8. The feeding control system (10) of a 3D printer (100) according to claim 7, wherein the filament (200) and the first feeding apparatus (1) are both plural in number, wherein the filaments (200) are disposed corresponding to the respective first feeding apparatuses (1), wherein the feeding tube (3) has a main tube (31) disposed at one end thereof and a plurality of split tubes (32) which extend from the other end thereof and communicate with the main tube (31), wherein the main tube (31) is connected to the second feeding apparatus (2) and the split tubes (32) are connected to the respective outlets (12).

9. The feeding control system (10) of a 3D printer (100) according to claim 8, further comprising a calculator (7) and a plurality of reloading sensors (8), wherein the calculator (7) is electrically connected to each of the first feeding apparatuses (1) and the reloading sensors (8) are disposed corresponding to the respective first feeding apparatuses (1), wherein each of the reloading sensors (8) is used to detect the separation due to shortage of the filament (200) from the outlet (12) to generate a reloading signal, wherein after receiving the reloading signal of one of the first feeding apparatuses (1), the calculator (7) drives the fixed wheel set (13) and the movable wheel set (14) of another of the first feeding apparatuses (1) to hold and deliver the filament (200) to the split tube (32).

10. A feeding control method of a 3D printer (100), comprising the steps of:
(a) providing a first feeding apparatus (1) comprising an outlet (12) and a driving wheel (131) which drives and delivers a filament (200);
(b) providing a second feeding apparatus (2) installed in the interior of the 3D printer (100), wherein when the filament (200) enters the 3D printer (100), the second feeding apparatus (2) drives and delivers the filament (200);
(c) causing the first feeding apparatus (1) to drive and deliver the filament (200) to the 3D printer (100) through the outlet (12); and
(d) controlling the second feeding apparatus (2) to drive and deliver the filament (200) and causing the first feeding apparatus (1) to stop delivering the filament (200) when the filament (2) enters the 3D printer (100).

11. The feeding control method of a 3D printer (100) according to claim 10, wherein the step (c) further comprises the step of providing a feeding tube (3), wherein the feeding tube (3) is connected between the outlet (12) and the second feeding apparatus (2), wherein the feeding tube (3) is used to direct the filament (200) to be delivered from the outlet (12) to the second feeding apparatus (2).

12. The feeding control method of a 3D printer (100) according to claim 10, wherein the step (d) further comprises the steps of providing a feeding sensor (4) and providing a controller (15), wherein the feeding sensor (4) is disposed corresponding to the second feeding apparatus (2) to sense entrance of the filament (200) driven and delivered by the second feeding apparatus (2) to generate a release signal, wherein the controller (15) is disposed corresponding to the first feeding apparatus (1) such that the delivery of the filament (200) by the first feeding apparatus (1) is stopped after the controller (15) receives the release signal.

13. The feeding control method of a 3D printer (100) according to claim 10, further comprising the step of providing a fixed wheel set (13) and a movable wheel set (14), wherein the driving wheel (131) is disposed at the fixed wheel set (13), the step of controlling the movable wheel set (14) and the fixed wheel set (13) apart from each other to release the filament (200), and the step of causing the driving wheel (131) to stop the delivery of the filament (200) of the first feeding apparatus (1).

14. The feeding control method of a 3D printer (100) according to claim 11, wherein the filament (200) and the first feeding apparatus (1) are both plural in number, wherein the filaments (200) are disposed corresponding to the respective first feeding apparatuses (1), wherein the feeding tube (3) has a main tube (31) disposed at one end thereof and a plurality of split tubes (32) which extend from the other end thereof and communicate with the main tube (31), wherein the main tube (31) is connected to the second feeding apparatus (2) and the split tubes (32) are connected to the respective outlets (12).

15. The feeding control method of a 3D printer (100) according to claim 14, further comprising the step of providing a plurality of reloading sensors (8), wherein the reloading sensors (8) are disposed corresponding to the respective first feeding apparatuses (1), the step of causing each of the reloading sensors (8) to detect the separation due to shortage of the filament (200) from the outlet (12) to generate a reloading signal, and the step of causing another first feeding apparatus (1) to deliver the filament (200) to the main tube (31) through the corresponding split tube (32).
